# EUROPEAN PATENT SPECIFICATION

(11) **EP 4 066 082 B1**
(45) Date of publication and mention of the grant of the patent: **14.08.2024**
(21) Application number: 20829340.7
(22) Date of filing: 26.11.2020
(51) Int. Cl.: G05D 16/10, F17C 13/00, F16K 1/30

(54) **A PRESSURE REDUCER**
DRUCKMINDERER
RÉDUCTEUR DE PRESSION

(30) Priority: 29.11.2019 IT 201900022461
(43) Date of publication of application: 05.10.2022
(73) Proprietor: Maketube S.r.l., 63900 Fermo (FM) (IT)
(72) Inventor: BRACALENTE, Emiliano, 63900 Fermo (FM) (IT)
(74) Representative: Dall'Olio, Christian
(86) International application number: PCT/IB2020/061169
(87) International publication number: WO 2021/105914

(56) References cited:
- US-A- 3 472 292
- US-A- 4 793 379
- US-A1- 2003 217 774
- US-A1- 2011 000 551

## Description

### FIELD OF THE INVENTION

The present invention relates to the technical sector concerning pressure reducers associable to portable actuators, for example devices for obtaining infusions, for example coffee.

### DESCRIPTION OF THE PRIOR ART

Pressure reducers are known that are conformed in such a way as to receive, in a removable coupling, a relative compressed gas container, with the gas directed, with reduced pressure, to a user connectable to the body of the reducer.

US 2003/21774 describes a pressure reducer connectable to a container of compressed gas and to a user that uses the compressed gas; the reducer comprises a command lever by means of which a continuous flow of gas is created between the gas container and the user.

In the case of overpressure this flow is interrupted.

US 4,793,379 describes a pressure reducer comprising a body in which two channels are realised, respectively inlet and outlet, connectable correspondingly to a compressed gas source and to a user of the gas.

In this body, means are provided to regulate the gas pressure which flows towards the user.

On using the reducer there is a continuous gas flow from the compressed gas source to the user.

US 2011/000551 describes, and illustrates, a pressure regulator comprising: a body, which includes an inlet connectable to a receptacle containing a fluid under pressure, in which a channel is realised, destined to the transit of the fluid from the inlet to the output of the regulator; a first valve group, arranged in the body, which by means of the pressure of the fluid, supplied from the receptacle to the outlet of the regulator, in a prefixed range of pressure; a second valve group, arranged in the body between the first valve group and the outlet of the regulator, comprising a presser member which pushes the second valve group into a closed position which prevents the fluid from flowing through the second valve group up to the outlet of the pressure regulator; a actuator that is movable within the presser member so as to open the second valve group to enable the fluid to flow through the second valve group up to the outlet; a seal element connected to the above-mentioned outlet and comprising a channel, which extends through the seal element, which has a decreasing transversal series from the inlet of the seal element up to the outlet thereof.

US 3472/292 describes and illustrates a dispenser that includes a body comprising a chamber at high pressure, to which a cylinder of compressed gas is connectable, communicating with a low-pressure chamber by means of a capillary tube retained by a membrane. This membrane is associated to elastic organs the elastic reaction of which is controlled by a pressure regulator; when the pressure in the low-pressure chamber reaches a prefixed value the capillary tube intercepts a valve.

A lever is used to realise the communication between the low-pressure chamber and a passage connected to a user.

A safety valve is included, which discharges to the outside the gas present in the low-pressure chamber when the pressure therein exceeds a prefixed value.

### SUMMARY OF THE INVENTION

The aim of the invention is to provide a pressure reducer conformed in such a way as to decompress the pressure of a pressure source, and such as to activate a suitable actuator.

A further aim of the invention is to provide a pressure reducer having a modest weight and dimensions so as to be associable to a portable actuator. A further aim of the invention has the aim of providing a pressure reducer the functioning of which is actuated only by the compressed gas with which is it supplied.

A further aim of the invention is to realise a pressure reducer conformed in such a way as to receive, in a removable coupling, a cylinder, of a commercially available type, containing compressed gas.

A further aim of the invention is to provide a pressure reducer which, as well as satisfying the above aims, is functional and inexpensive in relation to the performance it provides.

The above aims are attained, as will become clear from the contents of the claims.

### BRIEF DESCRIPTION OF THE DRAWINGS

Further characteristics of the invention will emerge from the following description, with reference to the appended tables of drawings, in which:
- Figure 1 illustrates, in section, the pressure reducer in a non-operative configuration;
- Figure 2 illustrates, in section, the reducer in a step in which the reducer is predisposed for use;
- Figure 3 illustrates, in section, a step in which the reducer of the invention is in the operative configuration.

### DESCRIPTION OF THE PREFERRED EMBODIMENTS

With reference to figures, the pressure reducer, object of the present invention, comprises a body (1) (for example having a parallelepiped or cylindrical shape), comprising two heads, a first head (2A) and a second head (2B), situated on opposite sides, from which originate corresponding holes (3, 4), a first hole and a second hole.

The first hole 3 is connectable to a compressed gas source (e.g. carbon dioxide), for example a cylinder (B) removably couplable to the hole (3) by known means (3B).

The second hole (4) is connected, via a conduit, to a suitable actuator which will be more fully described in the following.

A first recess is realised in a first lateral portion (1A) of the body (1), for example perpendicular to the axis of the heads (2A, 2B), the first recess comprising two consecutive zones (30A, 30B), for example both having a circular section, the first zone (30A) having a larger diameter than the diameter of the second zone (30B).

A sort of ring (35) is associated to the first recess, a first part (36) of the ring (35) inserting freely in the second zone (30B), while the second part (37) couples unremovably with the first zone (30A).

A rod (39) is freely inserted in the hole (38) of the ring (35), which rod (39) comprises on one side, a head (39A), having a transversal dimension that is greater than the diameter of the rod, and on the other side a button (40); elastic organs (41) oppose the axial sliding of the rod from outside towards inside (arrow F).

The body (1) further comprises a second portion lateral (1B), situated on the opposite side to the first portion (1A); the second portion has a first recess, the section of which, proceeding from outside towards inside, is first circular (first part (5A)) and then annular (second part 5B)).

The inner surface of the second part (5B) delimits a prominence which is affected by a seat (6), coaxial with the second part (5B) comprising two consecutive segments (6A, 6B), first and second, with the first segment opening in the first part (5A) and the second segment (6B) having a smaller diameter than the diameter of the first segment (6A).

A sort of cap (14) having a complementary section to the section of the first recess, couples with the first recess and closes the external end of the seat (6); the dimensions of the cap are such as not to affect the internal part of the annular part (5B) of the recess.

The cap 14 comprises an undercut (14A) opposite the seat (6).

The body (1), at the external face of the second segment (6B), forms a sort of truncoconical cusp (7) having a channel (8) which opens on one side into the second segment (6B) of the seat (6) and on the other side into the first hole (3).

A piston (9) slides in the seat (6), the piston (9) comprising three consecutive stretches having different diameters; the first stretch (9A) sealedly slides in the first segment (6A), the second stretch (9B) (sealedly) slides at least partially in the second segment (6B), while the third stretch (9C), having a smaller diameter than the diameter of the second stretch (9B), is freely inserted in the second segment (6B) and is enveloped by a spring (10) interposed between the third stretch and the face affected by the cusp (7).

The spring (10) opposes the translation of the piston 9 towards the cusp (7) (arrow H).

The stretches (9A, 9B) have an axial hole (12) which on one side opens in front of the undercut (14A) of the cap (14) and on the other side communicates with a transversal hole (13) made in the third stretch (9C) of the piston (9); in this way a communication is created between the second segment (6B) of the seat (6) and the undercut (14A).

The external head of the third stretch (9C) of the piston (9) comprises a seal disc (16) (for example made of Teflon) destined to abut the cusp (7), as illustrated in the following.

The first segment (6A) of the seat (6), in the opposite side to the undercut (14A), communicates, via a channel (17), with the second part (5B) not affected by the cap (14); the second part (5B) communicates with outside via a hole (18).

The body (1) comprises a chamber (20) communicating, via a conduit (57), with the second segment (6B) of the seat (6); the head (39A) of the rod (39) is inserted in the chamber.

As already highlighted, the rod (39) is freely inserted in the hole (38) of the ring (35); it follows that, in the first part (36) of the hole, an annular crown (50) is created that, when an operator acts on the button (40) in direction (F), communicates with the chamber (20); a suitable seal (51) associated to the rod (39), ensures the seal between the rod (39) and the relative hole (38). The annular crown (50), via a channel (52) which crosses in order the ring (35) and the body (1), communicates with the second hole (4).

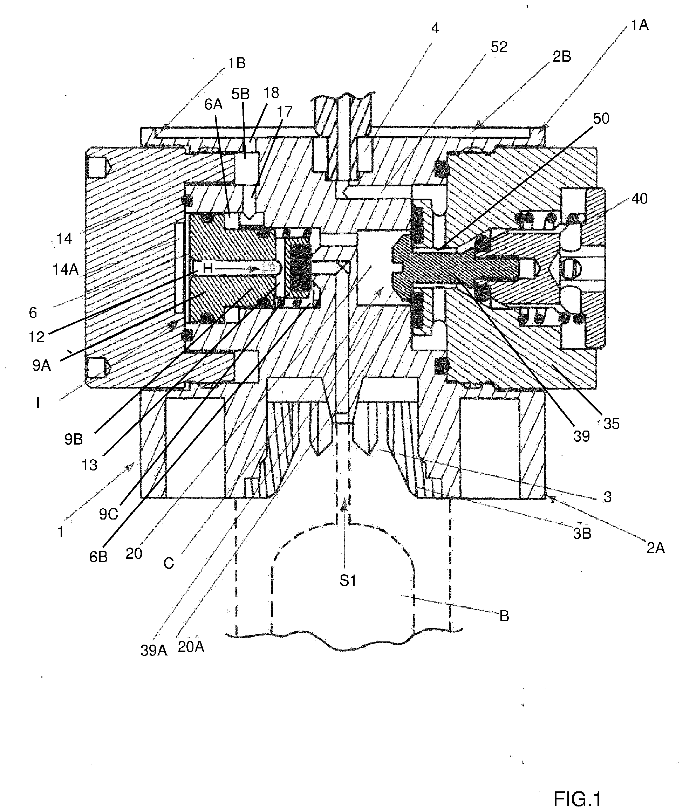

Definitively, the spring (41) maintains the head (39A) of the rod (39) in abutment against the adjacent wall (20A) of the chamber (20) (fig.1): in the closed position (C) which does not enable communication between the chamber (20) and the second hole (4).

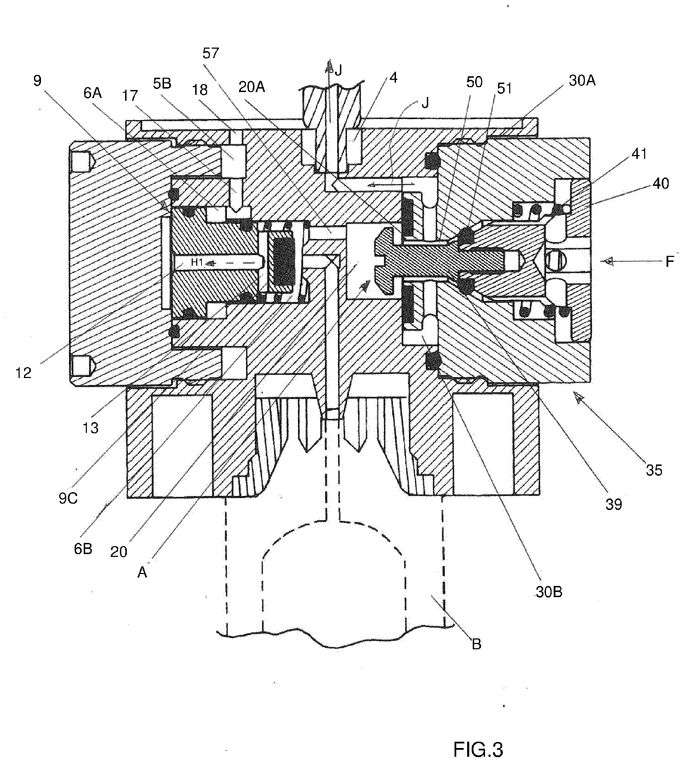

By acting on the button (40) (direction F) so as to overcome the elastic reaction of the spring (41), the head (39A) detaches from the wall (20A) (figure 3): in the open position (C) which enables communication between the chamber (20) and the second hole (4).

A description follows of the functioning of the pressure reducer.

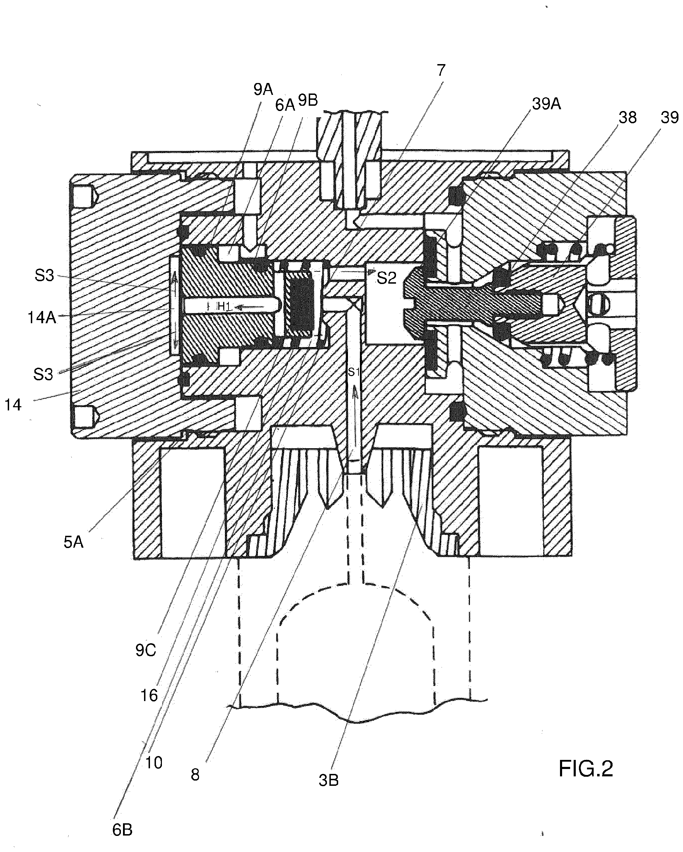

In a known way the operator activates the connection between the compressed gas source and the first hole (3); it follows that the gas flows (direction S1) into the conduit (8), exerting a pressure on the piston (9) (initially on the third stretch 9C) which flows in direction (H1); due to this the compressed gas enters the chamber (20) (direction S2), into the second segment (6B) of the seat (6), into the conduits (13, 12) and lastly into the undercut (14A) (direction S3): see figure 2.

As specified, the surface of the first stretch (9A) of the piston (9) (the one facing the undercut (14a)) is greater than the surface of the second stretch (9B) so that, after an initial translation in direction (H1), the piston (9) translates in the opposite direction (H) (opposed by the spring (10)) up to the intercepting of the third stretch (9C) against the cusp (7) (denoted by a broken line in figure 2) with a consequent halting of the gas flow through the channel (8) (figure 2).

The sliding of the piston (9) in the relative seat is only associated to the forces acting on the third stretch (9C) and respectively on the external and internal heads of the first stretch (9A) and second stretch (9B); in fact the internal head of the first stretch is associated to atmospheric pressure via the conduit (17), the annular part (5B), and conduit (18).

In the thus-defined situation, the pressure reducer is predisposed for use.

To use the reducer, it is necessary to press the button (40) so as to cause the rod (39) to slide in direction (F); this causes the detachment of the head (39A) from the relative abutment (20A) of the chamber (20), with a consequent connection of the chamber, via the channel (52), with the second hole (4).

The compressed gas flows from the chamber (20) towards the channel (52) (direction J) and thus supplies the actuator associated to the second hole (4). This leads to a reduction in the pressure of the gas in the chamber (20) and a consequent drop in pressure in the undercut (14A) (connected to the chamber (20) via the conduits (12, 13), second segment 6B, conduit 19); it follows that the force exerted on the piston (9) in direction (H) is reduced.

Following the supply of power to the actuator, this force reduces up to becoming lower than the force acting on the first stretch (9C), generated by the pressure of the compressed gas present in the conduit (8).

This determines the displacement of the piston (9) in direction (H1) (denoted by a broken line in figure 3) with the compressed gas supplying the chamber (20) with a consequent increase in pressure in the chamber.

This increase in pressure also affects the undercut (14A) which causes displacement of the piston (9) in direction (H) up to abutment of the third stretch (9C) against the cusp (7) which interrupts the inflow of compressed gas into the chamber (20).

There is a new decrease in pressure in the chamber, with a re-iteration of the operating cycle considered in the foregoing.

There is therefore an intermittent supply of gas to the second hole (4) (and therefore to the actuator), with a consequent reduction in pressure of the gas with respect to the pressure of the gas supply source.

Definitively, with the pressure of the chamber (20) being greater than a prefixed value, the piston (9) is in the non-operative condition (I) (figure 1): there is no connection between the channel and the compressed gas source and the chamber (20).

If, on the other hand, the pressure of the chamber (20) is lower than a determined value (lower than the above-mentioned prefixed value), the piston (9) is brought into the operative configuration (O) (figure 3) with a consequent activation of the connection between the source and the chamber (20).

The determined value and the predetermined value are identical.

The frequency of this intermittence is a function of various technical-functional aspects, mainly the ratio between the surfaces respectively of the external head of the first stretch (9A) and of the internal head of the second stretch (9B), of the section of the end of the channel (8), abutted by the third stretch (9C) of the piston, and by the elastic reaction of the spring (10) which opposes the translation of the piston (9) in direction (H).

If the force (F) acting on the button (40) is reset to zero, the spring (41) intervenes on the rod (39) in such a way as to occlude, by means of the head (39A), the communication between the chamber (20) and the annular crown (50) is annulled, and therefore also the flow (J) of gas towards the second hole (4): the actuator associated thereto is therefore deactivated.

The above-described pressure reducer has reduced volume and weight and is advantageously conformed to receive a cylinder of compressed gas, is associable, in a simple and rapid way, to an actuator; for the functioning thereof it is only necessary to press the button (40).

The reducer of the invention provides, to an actuator, a gas flow having a reduced pressure with respect to the pressure of the supply source (e.g. a cylinder).

This gas flow can be used in a plurality of applications, for example to draw water and direct it towards a filter containing coffee: this is a portable coffee machine.

## Claims

1. A pressure reducer, comprising:
a body (1) forming two heads, a first and a second, comprising relative holes, being a first and second (3, 4), respectively connectable to a compressed gas source and to an actuator;
first operating means, interposed between a chamber (20), internal to the body (1), and the first hole (3);
command means;
second operating means, interposed between the chamber (20) and the second hole (4), associated to said command means to allow or inhibit, the connection between the chamber (20) and the second hole (4);
wherein:
the first operating means are configured to cyclically open and close the connection between the first hole (3) and the chamber (20) for pressure values of the gas in the chamber (20) that are respectively lower and higher than a prefixed value;
the second operating means comprise a ring (35);
the body (1) comprises a first lateral portion (1A) forming a first recess which accommodates the ring (35);
the second operating means comprise a rod (39), freely inserted in a hole (38) of the ring (35), to define an annular crown (50) communicating with a first channel (52), affecting the ring (35) and the body (1), and opening in the second hole (4), with the rod forming a head (39A) inserted in the chamber (20);
the second operating means further comprise elastic means (41) which act on the rod (39), in opposition to the action of the command means (40), for the translation of the rod so as to define two characteristic positions for the head (39A) of the rod, respectively an open position (A) with a consequent connection of the chamber (20) with the second hole through the annular crown (50) and first channel (52), and a closed position (C) with a consequent closure of the connection;
the first operating means comprise a cap (14);
the body (1) comprises a second lateral portion (1B) the section of which, proceeding from outside towards inside, comprises a first circular part (5A) and a second annular part (5B) with which the cap (14) removably couples, the second lateral portion affording a cylindrical seat (6) comprising two consecutive segments (6A, 6B), the first segment (6A) opening into the first circular part (5A) and the second segment (6B) having a smaller diameter than the diameter of the first segment (6A);
the first operating means comprise a piston (9), constituted by at least three consecutive stretches (9A, 9B, 9C) with the first stretch (9A) and second stretch (9B) sealedly sliding correspondingly into the first segment (6A) and second segment (6B), and with the third stretch (9C) having a smaller diameter than the diameter of the second stretch (9B), a head of the third stretch being destined to abut an opposite face of the second segment (6B) of the cylindrical seat (6);
the first operating means comprise a second channel (8), made in the body (1), communicating on one side with the first hole (3) and opening on the other side in the face of the second segment (6B) of the cylindrical seat (6) opposite an external head of the third stretch (9C) of the piston (9);
the first operating means comprise an undercut (14A) realised in a face of the cap (14);
the first operating means comprise conduits (12, 13), communicating with one another, involving the piston (9), destined to place the second segment (6B) of the cylindrical seat (6) not affected by the second stretch (9B) of the piston (9) in communication with the undercut (14A);
the first operating means comprise a conduit (57), made in the body, which places the second segment (6B) of the cylindrical seat (6) in communication with the chamber (20);
the first operating means comprise conduits (17, 18) which connect, with outside, the part of the first segment (6A) of the cylindrical seat (6) delimited by an internal head of the first stretch (9A) of the piston (9), by the second stretch (9B) of the piston and by the body (1).

2. The pressure reducer of claim 1, wherein the command means (40) are constituted by a button that can be manually activated by an operator.

3. The pressure reducer of claim 1, wherein the part of the face of the second segment (6B) of the seat (6) opposite the external head of the third stretch (9C) of the piston (9), into which the second channel (8) opens, is conformed as a cusp (7) having a truncoconical shape.

4. The pressure reducer of claim 3, wherein the external head of the third stretch (9C) of the piston (9) comprises a seal ring (16) destined to abut the cusp (7) with a consequent deactivation of the connection between the first hole (3) and the chamber (20).

5. The pressure reducer of any one of claims 1, 3, 4 wherein it comprises elastic organs (10) which oppose the translation of the piston towards the face of the second segment (6B) of the seat (6) opposite the external head of the third stretch (9C) of the piston (9).

6. The pressure reducer of claim 1, wherein it comprises seal organs (51) that are associated to the rod (39), downstream of the first channel (52), the seal organs (51) being interposed between the rod and a sliding seat thereof.

7. The pressure reducer of claim 1, wherein it comprises, in the first hole (3), means for removably couplingly receiving a dispensing head of a cylinder (B) containing compressed gas.

## Patentansprüche

1. Ein Druckminderer, umfassend:
einen Körper (1), der zwei Köpfe bildet, einen ersten und einen zweiten, mit entsprechenden Löchern, die ein erstes und ein zweites (3, 4) sind, die mit einer Druckgasquelle bzw. mit einem Stellglied verbunden werden können;
erste Betätigungsmittel, die zwischen einer Kammer (20) im Inneren des Körpers (1) und dem ersten Loch (3) angeordnet sind;
Befehlsmittel;
zweite Betätigungsmittel, die zwischen der Kammer (20) und dem zweiten Loch (4) angeordnet sind und mit den Befehlsmitteln verbunden sind, um die Verbindung zwischen der Kammer (20) und dem zweiten Loch (4) zu ermöglichen oder zu verhindern;
wobei:
die ersten Betätigungsmittel so konfiguriert sind, dass sie die Verbindung zwischen dem ersten Loch (3) und der Kammer (20) zyklisch öffnen und schließen, wenn die Druckwerte des Gases in der Kammer (20) niedriger bzw. höher als ein vorgegebener Wert sind;
die zweiten Betätigungsmittel einen Ring (35) umfassen;
der Körper (1) einen ersten seitlichen Teil (1A) aufweist, der eine erste Ausnehmung bildet, die den Ring (35) aufnimmt;
die zweiten Betätigungsmittel eine Stange (39) umfassen, die frei in ein Loch (38) des Rings (35) eingesetzt ist, um einen ringförmigen Kranz (50) zu definieren, der mit einem ersten Kanal (52) in Verbindung steht, den Ring (35) und den Körper (1) beeinflusst und in das zweite Loch (4) mündet, wobei die Stange einen Kopf (39A) bildet, der in die Kammer (20) eingesetzt ist;
die zweiten Betätigungsmittel außerdem elastische Mittel (41) umfassen, die auf die Stange (39) entgegen der Wirkung der Steuermittel (40) für die Verschiebung der Stange wirken, um zwei charakteristische Positionen für den Kopf (39A) der Stange zu definieren, nämlich eine offene Position (A) mit einer entsprechenden Verbindung der Kammer (20) mit dem zweiten Loch durch den ringförmigen Kranz (50) und den ersten Kanal (52) und eine geschlossene Position (C) mit einer entsprechenden Schließung der Verbindung;
die ersten Betätigungsmittel eine Kappe (14) umfassen;
der Körper (1) einen zweiten seitlichen Abschnitt (1B) aufweist, dessen Querschnitt von außen nach innen einen ersten kreisförmigen Teil (5A) und einen zweiten ringförmigen Teil (5B) aufweist, mit dem die Kappe (14) abnehmbar verbunden ist, wobei der zweite seitliche Abschnitt einen zylindrischen Sitz (6) aufweist, der zwei aufeinanderfolgende Segmente (6A, 6B) umfasst, wobei das erste Segment (6A) in den ersten kreisförmigen Teil (5A) mündet und das zweite Segment (6B) einen kleineren Durchmesser als der Durchmesser des ersten Segments (6A) aufweist;
die ersten Betätigungsmittel einen Kolben (9) umfassen, der aus mindestens drei aufeinanderfolgenden Abschnitten (9A, 9B, 9C) besteht, wobei der erste Abschnitt (9A) und der zweite Abschnitt (9B) entsprechend dicht in dem ersten Segment (6A) und dem zweiten Segment (6B) gleiten und der dritte Abschnitt (9C) einen kleineren Durchmesser als der Durchmesser des zweiten Abschnitts (9B) hat, wobei ein Kopf des dritten Abschnitts dazu bestimmt ist, an einer gegenüberliegenden Fläche des zweiten Segments (6B) des zylindrischen Sitzes (6) anzustoßen;
die ersten Betätigungsmittel einen zweiten Kanal (8) umfassen, der in dem Körper (1) ausgebildet ist, auf einer Seite mit dem ersten Loch (3) in Verbindung steht und auf der anderen Seite in der Fläche des zweiten Segments (6B) des zylindrischen Sitzes (6) gegenüber einem äußeren Kopf des dritten Teils (9C) des Kolbens (9) mündet;
die ersten Betätigungsmittel eine Hinterschneidung (14A) aufweisen, die in einer Fläche der Kappe (14) realisiert ist;
die ersten Betätigungsmittel umfassen miteinander in Verbindung stehende Leitungen (12, 13), die den Kolben (9) einbeziehen und dazu bestimmt sind, das zweite Segment (6B) des zylindrischen Sitzes (6), das nicht von der zweiten Ausdehnung (9B) des Kolbens (9) betroffen ist, in Verbindung mit der Hinterschneidung (14A) zu bringen;
die ersten Betätigungsmittel eine im Körper ausgebildete Leitung (57) umfassen, die das zweite Segment (6B) des zylindrischen Sitzes (6) in Verbindung mit der Kammer (20) bringt;
die ersten Betätigungsmittel Leitungen (17, 18) umfassen, die den Teil des ersten Segments (6A) des zylindrischen Sitzes (6), der durch einen inneren Kopf des ersten Abschnitts (9A) des Kolbens (9), durch den zweiten Abschnitt (9B) des Kolbens und durch den Körper (1) begrenzt ist, mit der Außenseite verbinden.

2. Der Druckminderer nach Anspruch 1, wobei die Befehlsmittel (40) aus einem Knopf bestehen, der von einem Bediener manuell aktiviert werden kann.

3. Druckminderer nach Anspruch 1, wobei der Teil der Fläche des zweiten Segments (6B) des Sitzes (6) gegenüber dem äußeren Kopf des dritten Abschnitts (9C) des Kolbens (9), in den der zweite Kanal (8) mündet, als kegelstumpfförmiger Höcker (7) ausgebildet ist.

4. Druckminderer nach Anspruch 3, bei dem der äußere Kopf des dritten Abschnitts (9C) des Kolbens (9) einen Dichtungsring (16) umfasst, der dazu bestimmt ist, an dem Höcker (7) anzuliegen, wodurch die Verbindung zwischen der ersten Öffnung (3) und der Kammer (20) deaktiviert wird.

5. Der Druckminderer nach einem der Ansprüche 1, 3, 4, **dadurch gekennzeichnet, dass** er elastische Organe (10) umfasst, die der Verschiebung des Kolbens in Richtung der Fläche des zweiten Segments (6B) des Sitzes (6) gegenüber dem äußeren Kopf des dritten Abschnitts (9C) des Kolbens (9) entgegenwirken.

6. Druckminderer nach Anspruch 1, **dadurch gekennzeichnet, dass** er Dichtungsorgane (51) umfasst, die mit der Stange (39) stromabwärts des ersten Kanals (52) verbunden sind, wobei die Dichtungsorgane (51) zwischen der Stange und einem Gleitsitz derselben angeordnet sind.

7. Druckminderer nach Anspruch 1, **dadurch gekennzeichnet, dass** er in der ersten Bohrung (3) Mittel zur abnehmbaren Aufnahme eines Abgabekopfes eines Druckgas enthaltenden Zylinders (B) aufweist.

## Revendications

1. Un détendeur de pression, comprenant :
un corps (1) formant deux têtes, une première et une seconde, comprenant des trous relatifs, étant une première et une seconde (3, 4), respectivement connectables à une source de gaz comprimé et à un actionneur ;
un premier moyen de fonctionnement, interposé entre une chambre (20), interne au corps (1), et le premier trou (3) ;
des moyens de commande ;
des seconds moyens de fonctionnement, interposés entre la chambre (20) et le second trou (4), associés auxdits moyens de commande pour permettre ou inhiber la connexion entre la chambre (20) et le second trou (4) ;
dans lequel :
les premiers moyens de fonctionnement sont configurés pour ouvrir et fermer cycliquement la connexion entre le premier trou (3) et la chambre (20) pour des valeurs de pression du gaz dans la chambre (20) qui sont respectivement inférieures et supérieures à une valeur préfixée ;
les seconds moyens de fonctionnement comprennent un anneau (35) ;
le corps (1) comprend une première partie latérale (1A) formant un premier logement pour la bague (35) ;
les seconds moyens de commande comprennent une tige (39), insérée librement dans un trou (38) de la bague (35), pour définir une couronne annulaire (50) communiquant avec un premier canal (52), affectant la bague (35) et le corps (1), et débouchant dans le second trou (4), la tige formant une tête (39A) insérée dans la chambre (20) ;
les seconds moyens de fonctionnement comprennent en outre des moyens élastiques (41) qui agissent sur la tige (39), en opposition à l'action des moyens de commande (40), pour la translation de la tige de manière à définir deux positions caractéristiques pour la tête (39A) de la tige, respectivement une position ouverte (A) avec une connexion conséquente de la chambre (20) avec le second trou à travers la couronne annulaire (50) et le premier canal (52), et une position fermée (C) avec une fermeture conséquente de la connexion ;
les premiers moyens de fonctionnement comprennent un capuchon (14) ;
le corps (1) comprend une deuxième partie latérale (1B) dont la section, de l'extérieur vers l'intérieur, comprend une première partie circulaire (5A) et une deuxième partie annulaire (5B) avec laquelle le capuchon (14) s'accouple de manière amovible, la deuxième partie latérale offrant un siège cylindrique (6) comprenant deux segments consécutifs (6A, 6B), le premier segment (6A) s'ouvrant dans la première partie circulaire (5A) et le deuxième segment (6B) ayant un diamètre plus petit que le diamètre du premier segment (6A) ;
les premiers moyens de fonctionnement comprennent un piston (9), constitué d'au moins trois tronçons consécutifs (9A, 9B, 9C), le premier tronçon (9A) et le deuxième tronçon (9B) coulissant de manière étanche dans le premier segment (6A) et le deuxième segment (6B), et le troisième tronçon (9C) ayant un diamètre inférieur au diamètre du deuxième tronçon (9B), une tête du troisième tronçon étant destinée à venir en butée contre une face opposée du deuxième segment (6B) du siège cylindrique (6) ;
les premiers moyens de manoeuvre comprennent un deuxième canal (8), réalisé dans le corps (1), communiquant d'un côté avec le premier trou (3) et s'ouvrant de l'autre côté dans la face du deuxième segment (6B) du siège cylindrique (6) opposée à une tête externe du troisième tronçon (9C) du piston (9) ;
les premiers moyens de fonctionnement comprennent une contre-dépouille (14A) réalisée dans une face du bouchon (14) ;
les premiers moyens de fonctionnement comprennent des conduits (12, 13), communiquant entre eux, impliquant le piston (9), destinés à mettre en communication avec la contre-dépouille (14A) le deuxième segment (6B) du siège cylindrique (6) non affecté par le deuxième étirement (9B) du piston (9) ; les premiers moyens de fonctionnement comprennent un conduit (57), réalisé dans le corps, qui met le deuxième segment (6B) du siège cylindrique (6) en communication avec la chambre (20) ;
les premiers moyens de manoeuvre comprennent des conduits (17, 18) qui relient, à l'extérieur, la partie du premier segment (6A) du siège cylindrique (6) délimitée par une tête interne du premier tronçon (9A) du piston (9), par le deuxième tronçon (9B) du piston et par le corps (1).

2. Le détendeur de pression de la revendication 1, dans lequel les moyens de commande (40) sont constitués par un bouton qui peut être activé manuellement par un opérateur.

3. Détendeur de pression selon la revendication 1, dans lequel la partie de la face du deuxième segment (6B) du siège (6) opposée à la tête externe du troisième tronçon (9C) du piston (9), dans laquelle débouche le deuxième canal (8), est conformée en une cuspide (7) de forme tronconique.

4. Le détendeur de pression de la revendication 3, dans lequel la tête externe du troisième tronçon (9C) du piston (9) comprend un anneau d'étanchéité (16) destiné à buter contre la cuspide (7) avec une désactivation conséquente de la connexion entre le premier trou (3) et la chambre (20).

5. Le détendeur de pression de l'une quelconque des revendications 1, 3, 4 dans lequel il comprend des organes élastiques (10) qui s'opposent à la translation du piston vers la face du deuxième segment (6B) du siège (6) opposée à la tête externe du troisième tronçon (9C) du piston (9).

6. Le détendeur de pression de la revendication 1, dans lequel il comprend des organes d'étanchéité (51) qui sont associés à la tige (39), en aval du premier canal (52), les organes d'étanchéité (51) étant interposés entre la tige et un siège de glissement de celle-ci.

7. Détendeur selon la revendication 1, dans lequel il comprend, dans le premier trou (3), des moyens pour recevoir par couplage amovible une tête de distribution d'une bouteille (B) contenant du gaz comprimé.
